Europäisches Patentamt

European Patent Office

Office européen des brevets

(19)

(11) **EP 0 674 168 B1**

(12)           **EUROPÄISCHE PATENTSCHRIFT**

(45) Veröffentlichungstag und Bekanntmachung des Hinweises auf die Patenterteilung:
**10.12.1997  Patentblatt 1997/50**

(51) Int Cl.⁶: **G01N 15/04**

(21) Anmeldenummer: **95810096.8**

(22) Anmeldetag: **15.02.1995**

(54) **Vorrichtung und Verfahren zum automatischen Ermitteln der Sedimentationshöhe in einem Sedimentometer**

Device and method for automatically measuring the height of sedimentation in a sedimentometer

Dispositif et méthode pour mesurer automatiquement la hauteur de sédimentation dans un sédimentomètre

(84) Benannte Vertragsstaaten:
**AT CH DE FR GB IT LI SE**

(30) Priorität: **21.03.1994  CH 837/94**

(43) Veröffentlichungstag der Anmeldung:
**27.09.1995  Patentblatt 1995/39**

(73) Patentinhaber: **SIA Schweizer Schmirgel- und Schleifindustrie AG
CH-8500 Frauenfeld (CH)**

(72) Erfinder:
• **Futterer, Manfred
CH-8500 Frauenfeld (CH)**
• **Bolli, Gerhard
CH-8572 Berg (CH)**

(74) Vertreter: **Hepp, Dieter et al
Hepp, Wenger & Ryffel AG,
Friedtalweg 5
9500 Wil (CH)**

(56) Entgegenhaltungen:
**EP-A- 0 017 712          DE-A- 4 036 048**

**Beschreibung**

Die Erfindung bezieht sich auf eine Vorrichtung und ein Verfahren zum automatischen Ermitteln der Sedimentationshöhe im Verlaufe eines Sedimentationsvorgangs in einem Sedimentometer.

Sedimentometer werden für Partikelgrössenanalysen verwendet. Bekannte Sedimentometer besitzen ein vertikales, mit einer Flüssigkeit gefülltes Sedimentationsrohr, in dessen unteres Ende von unten ein ebenfalls vertikales Sammelrohr hineinragt. In einem Zeitpunkt t = 0 wird eine Probe eines zu analysierenden Materials auf die Oberseite der Flüssigkeit im Sedimentationsrohr gegeben. Die Sinkgeschwindigkeit der Partikel in der Flüssigkeit ist proportional zum Quadrat des Durchmessers d von äquivalenten Kügelchen. In einem Sedimentvolumen, das den verschlossenen Grund des Sammelrohrs nach einer Zeit t erreicht, ist der Aequivalenzdurchmesser d der Partikel umgekehrt proportional zur Quadratwurzel der Sinkzeit t. Der Partikeldurchmesser d kann entsprechend dem Gesetz von Stocke wie folgt berechnet werden:

$$d = \frac{k}{\sqrt{t}}$$

Dabei hängt die konstante K insbesondere von der Viscosität und Dichte der Flüssigkeit sowie von der Dichte der Partikel ab.

Ueblicherweise wird so vorgegangen, dass die Zeiten ermittelt werden, in denen sich bestimmte Volumina der Probe auf dem Grund des Sammelrohrs abgesetzt haben. Die Volumina werden erhalten durch Ablesen der Höhe des Sediments an einer auf dem Sammelrohr angebrachten Skala. Nach Abschluss der Sedimentation werden für jedes Einzelvolumen der prozentuale Anteil am Gesamtvolumen der Probe sowie - aus der zugeordneten Zeit t - der Aequivalentdurchmesser d errechnet. So erhält man die prozentuale Korngrössenverteilung in der Probe.

Das laufende Ablesen der Sedimentationshöhe im Sammelrohr in Abhängigkeit von der Zeit ist mühsam und zeitaufwendig. Eine Sedimentation kann bis zu ihrem Abschluss bei feinkörnigem Material mehrere Stunden dauern. Bisher bekannte Versuche zur Automatisierung derartiger Analysen basieren unter anderem auf der indirekten Messung. Dabei wird vor allem die Trübung in verschiedenen Höhen oder die Teilchengrösse gemessen und daraus auf die Sedimentationshöhe geschlossen (z.B. DE-A-4036048). Diese Verfahren sind relativ ungenau.

Die EP-A-17712 offenbart in Fig.1 eine Vorrichtung zum automatischen Ermitteln der Sedimentationshöhe im Verlauf eines Sedimentationsvorgangs in einem Sedimentometer, wobei auf einander gegenüberliegenden Seiten des Sedimentometers wenigstens eine Beleuchtungseinrichtung und eine Lichtsensoreinrichtung angeordnet sind, dass die Lichtsensoreinrichtung mittels eines Stellmotors höhenverstellbar ist und dass die Ausgangssignale der Lichtsensoreinrichtung einer Reglereinrichtung zugeführt sind, welche mit dem Stellmotor derart in Wirkverbindung steht, dass die Höhe der Lichtsensoreinrichtung nachregelbar ist, so dass während des Sedimentationsvorgangs die Lichtsensoreinrichtung der sich nach unten verlagernden Oberseite der Feststoffschicht folgt (S.6,Z.2-5).

Die Aufgabe der Erfindung besteht darin, eine Vorrichtung und ein Verfahren zur Verfügung zu stellen, mit der die Sedimentationshöhe im Verlaufe eines Sedimentationsvorgangs in einem Sedimentometer automatisch und mit grosser Genauigkeit ermittelt werden kann.

Die erfindungsgemässe Vorrichtung, mit der die Aufgabe gelöst wird, ist dadurch gekennzeichnet, dass auf einander gegenüberliegenden Seiten des Sedimentometers eine Beleuchtungseinrichtung und eine Lichtsensoreinrichtung angeordnet sind, dass die Lichtsensoreinrichtung mittels eines Stellmotors höhenverstellbar ist und zwei übereinander angeordnete Lichtempfänger enthält und dass die Ausgangssignale der beiden Lichtempfänger einer Reglereinrichtung zugeführt sind, welche den Stellmotor so betätigt, dass die auf die beiden Lichtempfänger fallenden Lichtmengen im Verlaufe des Sedimentationsvorgangs stets in einem vorbestimmten Verhältnis zueinander stehen. Durch dieses sogenannte Kompensationsprinzip werden z.B. Lampenalterung, Farbunterschiede im zu messenden Material, Fremdlicht usw. kompensiert.

Die Lichtmengen, die auf die beiden Lichtempfänger fallen, sind abhängig von der Schwächung des Lichts beim Durchtritt durch das Sedimentometer und die darin enthaltene Flüssigkeit bzw. Suspension. Zusätzlich ist die auf den unteren der beiden Lichtempfänger fallende Lichtmenge bezogen auf die auf den oberen Lichtempfänger fallende Lichtmenge dadurch in dem genannten vorbestimmten Verhältnis reduziert, dass ein Teil des Lichtes auf dem Weg zum unteren Lichtempfänger durch das Sediment im Sedimentometer blockiert ist. Durch das Konstanthalten des genannten Verhältnisses mittels der Reglereinrichtung wird der untere Lichtempfänger stets auf die Höhe der Obergrenze des Sediments eingestellt.

Die Höheneinstellung der Lichtsensoreinrichtung kann ohne Schwierigkeiten laufend automatisch gemessen, registriert und ausgewertet werden.

Die Erfindung wird nachstehend anhand der Zeichnung beispielsweise näher erläutert. In dieser zeigen:

Figur 1    einen schematischen Vertikalschnitt durch ein Sedimentationsrohr und ein Sammelrohr eines Sedimentometers,

Figur 2    in grösserem Massstab den untersten Endabschnitt des Sammelrohrs des Sedimentometers von Fig. 1 und dazu schematisch Teile einer Ausführungsform der erfindungsgemässen Vorrichtung und

Fig. 3 ein Schema von weiteren Teilen der Vorrichtung.

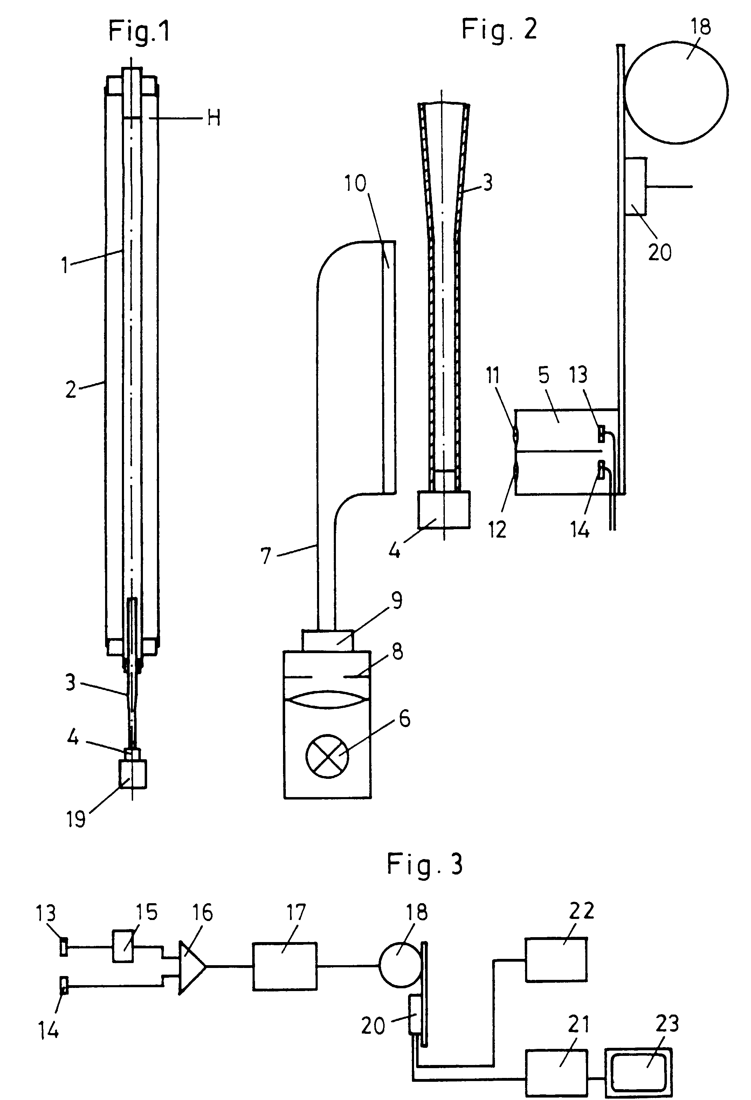

Gemäss Fig. 1 besitzt ein Sedimentometer ein vertikales, bis zu einer Höhe H mit einer Flüssigkeit gefülltes Sedimentationsrohr 1. Das Sedimentationsrohr 1 ist von einem Wassermantel 2 umgeben, der die Sedimentationsflüssigkeit im Rohr 1 auf einer vorbestimmten, konstanten Temperatur hält. In das untere Ende des Sedimentationsrohrs 1 erstreckt sich von unten her ein Sammelrohr 3, dessen oberes Ende offen ist, während das untere Ende mit einem Stopfen 4 verschlossen ist.

Mit einem solchen Sedimentometer kann eine Partikelgrössenanalyse z.B. so durchgeführt werden, dass in einem Zeitpunkt t = 0 eine Probe eines zu analysierenden Materials, in Sedimentationsflüssigkeit suspendiert, auf die Oberseite der Flüssigkeit im Sedimentationsrohr 1 gegeben wird. Gleichzeitig kann ein Zeitgeber gestartet werden. Die Partikel sinken in der Sedimentationsflüssigkeit mit Geschwindigkeiten nach unten, die von der Grösse der Partikel abhängen, und setzen sich schliesslich auf dem Grund des Sammelrohrs 3, d.h. auf der Oberseite des Stopfens 4, ab.

Die erfindungsgemässe Vorrichtung dient dazu, während eines solchen Sedimentationsvorgangs die Höhe des auf der Oberseite des Stopfens 4 abgesetzten Materials laufend automatisch zu messen. Die Vorrichtung enthält eine Lichtsensoreinrichtung 5 (Fig. 2) mit zwei Lichtempfängern, welche Licht aufnehmen, das an zwei übereinander liegenden Stellen durch das Sammelrohr 3 und die in diesem enthaltene Flüssigkeit bzw. Suspension hindurchtritt.

Das Licht kommt von einer Beleuchtungseinrichtung, die auf der der Lichtsensoreinrichtung 5 gegenüberliegenden Seite des Sammelrohrs 3 einen schmalen, vertikalen leuchtenden Streifen mit über die Höhe des Streifens gleichbleibender Helligkeit erzeugt. In der dargestellten bevorzugten Ausführungsform enthält die Beleuchtungseinrichtung eine Lichtquelle 6, welche die Eingangs-Enden der Lichtleiter in einem Lichtleiterbündel 7 beleuchtet. Vor diesen Eingangs-Enden können eine regulierbare Irisblende 8, ein Diffusor 9 zum Vergleichmässigen der Beleuchtung der Eingangs-Enden sowie gewünschtenfalls auswechselbare Farbfilter angeordnet sein. Das Lichtleiterbündel 7 dient als Querschnittwandler: Während die Eingangs-Enden der Lichtleiterfasern beispielsweise in einem etwa kreisrunden Querschnitt liegen, bilden die Ausgangs-Enden der Lichtleiterfasern den genannten schmalen, vertikalen leuchtenden Streifen. Zwischen den Ausgangs-Enden der Lichtleiter und dem Sammelrohr 3 ist zweckmässig eine Stablinse 10 angeordnet.

Anstelle dieser Beleuchtungseinrichtung könnte aber auch eine Beleuchtungseinrichtung mit zwei Lichtleitern jedoch bevorzugt nur <u>eine</u> Lichtquelle verwendet

werden, die gemeinsam mit den beiden Lichtempfängern in der noch zu beschreibenden Weise bewegt werden.

Die beiden Lichtempfänger der Lichtsensoreinrichtung 5 enthalten zwei neben dem Sammelrohr 3 übereinander angeordnete Linsen 11 und 12. Die obere Linse 11 nimmt Licht aus dem Sammelrohr 3 in einem etwa horizontalen Strahlengang auf und konzentriert das Licht auf ein erstes lichtempfindliches Element 13 in der Lichtsensoreinrichtung. Die untere Linse 12 nimmt Licht aus dem Sammelrohr 3 ebenfalls in einem im wesentlichen horizontalen Strahlengang auf und konzentriert das Licht auf ein zweites lichtempfindliches Element 14.

Wie in Fig. 3 dargestellt, ist das Ausgangssignal des ersten lichtempfindlichen Elementes 13 über einen Spannungsteiler 15 einem Differentialverstärker 16 zugeführt. Das Ausgangssignal des lichtempfindlichen Elements 14 ist dem Differentialverstärker 16 direkt zugeführt. Der Differentialverstärker 16 gibt ein Ausgangssignal immer dann ab, wenn die Ausgangssignale der lichtempfindlichen Elemente 13 und 14 - und damit die auf die beiden lichtempfindlichen Elemente fallenden Lichtmengen - nicht in einem vorbestimmten, durch den Spannungsteiler 15 gegebenen Verhältnis zueinander stehen. Das Ausgangssignal des Differentialverstärkers 16 ist einem Regler 17 zugeführt, der einen Stellmotor 18 betätigt. Die ganze Lichtsensoreinrichtung 5 ist höhenverstellbar angeordnet, und der Stellmotor 18 stellt die Höhenlage der Lichtsensoreinrichtung 5 stets so ein, dass die Lichtmengen, die auf die lichtempfindlichen Elemente 13 und 14 fallen, in dem vorbestimmten Verhältnis zueinander stehen, z.B. in einem Verhältnis von 2 : 1. Dabei ist die auf das zweite lichtempfindliche Element 14 fallende Lichtmenge dadurch kleiner als die auf das Element 13 fallende Lichtmenge, dass der Strahlengang durch die untere Linse 12 teilweise, z.B. zu 50%, durch den Stopfen 4 bzw. im Betrieb dann auch durch das auf der Oberseite des Stopfens 4 liegende Sediment versperrt ist. Der Stopfen 4 ist lichtundurchlässig und hat eine ebene, horizontale Oberseite.

Für die Durchführung einer Partikelgrössenanalyse wird wie schon erwähnt in einem Zeitpunkt t = 0 ein Zeitgeber gestartet und eine Materialprobe auf die Oberseite der Flüssigkeit im Sedimentationsrohr 1 gegeben. Die Reglereinrichtung 16, 17 und der Stellmotor 18 haben die Lichtsensoreinrichtung 5 anfänglich so eingestellt, dass die untere Linse 12 auf der Höhe der Oberseite des Stopfens 4 liegt. Die in der Sedimentationsflüssigkeit nach unten sinkenden Partikel bewirken in der Flüssigkeit eine Trübung, die, wenn sie in den Bereich der Lichtsensoreinrichtung 5 gelangt, eine Schwächung der auf die lichtempfindlichen Elemente 13 und 14 fallenden Lichtmengen zur Folge hat. Da die Lichtschwächung bei beiden Elementen 13 und 14 gleich ist, ändert sich das Verhältnis zwischen den Lichtmengen nicht.

Jedoch ist zu beachten, dass die Ausgangssignale beider lichtempfindlichen Elemente 13 und 14 infolge der Lichtschwächung sehr stark abnehmen können, z.

B. um einen Faktor in einer Grössenordnung von bis zu $10^3$ oder $10^4$. Daher ist der Differentialverstärker 16 zweckmässig ein logarithmischer Verstärker, damit er Signale in einem so grossen Bereich verarbeiten kann.

Auf der Oberseite des Stopfens 4 setzen sich zuerst die grössten Partikel ab und dann im weiteren Verlauf des Sedi-mentationsvorganges immer kleinere Partikel. Dabei wird die Höhenlage der Lichtsensoreinrichtung 5 durch die Reglereinrichtung 16, 17 und den Stellmotor 18 laufend derart nachgestellt, dass die untere Linse 12 stets auf die Oberseite des Sediments ausgerichtet bleibt. Eine übliche Klopfeinheit 19 (Fig. 1), die auf den Stopfen 4 wirkt, sorgt dafür, dass die Oberseite des Sediments im Verlaufe der Sedimentation eben bleibt.

Mit der Lichtsensoreinrichtung oder mit dem Stellmotor 18 ist wenigstens ein Signalgeber 20 gekuppelt. Der Signalgeber 20 wird durch die Höhenverstellung der Lichtsensoreinrichtung 5 so betätigt, dass er ein Ausgangssignal abgibt, welches jederzeit die Höheneinstellung der Lichtsensoreinrichtung und damit die Höhe des auf der Oberseite des Stopfens 4 abgesetzten Sediments darstellt. Der Signalgeber 20 kann ein Impulsgeber sein, der ein den Verfahrweg der Lichtsensoreinrichtung darstellendes Signal in digitaler Form abgibt, welches zur Auswertung einem Rechner 21 zugeführt werden kann. Daneben besteht auch die Möglichkeit, als Signalgeber ein Potentiometer zu verwenden, welches ein analoges Ausgangssignal abgibt. Mit dem analogen Signal kann beispielsweise in einem Schreiber 22 die Sedimentationshöhe in Abhängigkeit von der Zeit direkt als Kurve aufgezeichnet werden. Stattdessen könnte ein Schreiber auch direkt mechanisch mit der Lichtsensoreinrichtung 5 gekuppelt werden, um eine solche Kurve aufzuzeichnen.

Der Rechner 21 kann die mit der Lichtsensoreinrichtung 5 ermittelten Höhen des Sediments nach irgend einem gewünschten Programm auswerten. So kann er auf einem Bildschirm 23 den Sedimentationsverlauf in Echtzeit darstellen, oder er kann nach Abschluss eines Sedimentationsvorgangs die Summenverteilung der Korngrössen linear oder logarithmisch aufzeichnen oder auch daraus eine Kornverteilungskurve errechnen. Eine tabellarische Darstellung der Messresultate oder der daraus errechneten Werte ist ebenfalls möglich.

Ausserdem lässt sich dabei auch die absolute Höhe des Sediments und damit die Sedimentations-Dichte messen, woraus Rückschlüsse auf das Sediment möglich sind.

**Patentansprüche**

1. Vorrichtung zum automatischen Ermitteln der Sedimentationshöhe im Verlaufe eines Sedimentationsvorgangs in einem Sedimentometer, wobei auf einander gegenüberliegenden Seiten des Sedimentometers (1, 3) wenigstens eine Beleuchtungseinrichtung (6, 7) und eine Lichtsensoreinrichtung (5) angeordnet sind, wobei die Lichtsensoreinrichtung mittels eines Stellmotors (18) höhenverstellbar ist und zwei übereinander angeordnete Lichtempfänger (11, 13; 12, 14) enthält und wobei die Ausgangssignale der beiden Lichtempfänger einer Reglereinrichtung (16, 17) zugeführt sind, welche mit dem Stellmotor (18) derart in Wirkverbindung steht, dass die Höhe der beiden Lichtempfänger (11, 13; 12, 14) nachregelbar ist, so dass die auf jeden Lichtempfänger fallenden Lichtmengen im Verlaufe des Sedimentationsvorgangs stets in einem vorbestimmbaren Verhältnis zueinander stehen.

2. Vorrichtung nach Anspruch 1, dadurch gekennzeichnet, dass die Lichtsensoreinrichtung (5) mit wenigstens einem Signalgeber (20) gekuppelt ist, dessen Ausgangssignal die Höheneinstellung der Lichtsensoreinrichtung (5) darstellt.

3. Vorrichtung nach Anspruch 2, dadurch gekennzeichnet, dass das Ausgangssignal des Signalgebers (20) einer Auswertungseinrichtung (22; 21, 23) zugeführt ist, welche die Höheneinstellung als Funktion der Zeit darstellt.

4. Vorrichtung nach Anspruch 3, dadurch gekennzeichnet, dass die Auswertungseinrichtung (21, 23) einen Rechner (21) enthält zum Ermitteln der Summenverteilung der Korngrössen einer Probe oder einer Kornverteilungskurve.

5. Vorrichtung nach einem der Ansprüche 1 bis 4, dadurch gekennzeichnet, dass die Reglereinrichtung (16, 17) einen logarithmischen Differentialverstärker (16) für die Ausgangssignale der beiden Lichtempfänger (11, 13; 12, 14) enthält.

6. Vorrichtung nach einem der Ansprüche 1 bis 5, dadurch gekennzeichnet, dass die Beleuchtungseinrichtung (6, 7) eine Lichtquelle (6) und einen Querschnittwandler (7) mit Lichtleitern enthält zum Abgeben von Licht in Form eines langgestreckten vertikalen Streifens auf einen unteren Abschnitt des Sedimentometers (1, 3).

7. Vorrichtung nach einem der Ansprüche 1 bis 6, dadurch gekennzeichnet, dass die Lichtempfänger (11, 13; 12, 14) zwei übereinander angeordnete Linsen (11, 12) zum Konzentrieren von Licht aus je einem Abschnitt des Sedimentometers (1, 3) auf je ein lichtempfindliches Element (13, 14) enthalten.

8. Verfahren zum automatischen Ermitteln der Sedimentationshöhe im Verlaufe eines Sedimentationsvorgangs in einem Sedimentometer, wobei auf einander gegenüberliegenden Seiten des Sedimentometers (1, 3) wenigstens eine Beleuchtungseinrichtung (6, 7) und eine Lichtsensoreinrichtung (5) angeordnet sind, wobei die Lichtsensoreinrichtung mittels eines Stellmotors (18) in der Höhe verstellt wird und durch zwei übereinander angeordnete Lichtempfänger (11, 13; 12, 14) Signale von der Beleuchtungseinrichtung empfängt, und wobei die Ausgangssignale der beiden Lichtempfänger einer Reglereinrichtung (16, 17) zugeführt werden, welche mit dem Stellmotor (18) derart in Wirkverbindung stehen, dass die auf die beiden Lichtempfänger (11, 13; 12, 14) fallenden Lichtmengen im Verlaufe des Sedimentationsvorgangs stets in einem vorbestimmbaren Verhältnis zueinander stehen.

## Claims

1. Apparatus for automatically ascertaining the sedimentation height in the course of a sedimentation procedure in a sedimentometer, wherein arranged on mutually opposite sides of the sedimentometer (1, 3) are at least one lighting device (6, 7) and a light sensor device (5), wherein the light sensor device is adjustable in respect of height by means of a setting motor (18) and includes two light receivers (11, 13; 12, 14) which are arranged one above the other, and wherein the output signals of the two light receivers are fed to a regulating device (16, 17) which is operatively connected to the setting motor (18) in such a way that the height of the two light receivers (11, 13; 12, 14) can be adjusted so that the amounts of light incident on each light receiver in the course of the sedimentation procedure are always in a predeterminable ratio to each other.

2. Apparatus according to claim 1 characterised in that the light sensor device (5) is coupled to at least one signal generator (20) whose output signal represents the height setting of the light sensor device (5).

3. Apparatus according to claim 2 characterised in that the output signal of the signal generator (20) is fed to an evaluation device (22; 21, 23) which represents the height setting as a function of time.

4. Apparatus according to claim 3 characterised in that the evaluation device (21, 23) includes a computer (21) for ascertaining the sum distribution of the grain sizes of a sample or a grain distribution curve.

5. Apparatus according to one of claims 1 to 4 characterised in that the regulating device (16, 17) includes a logarithmic differential amplifier (16) for the output signals of the two light receivers (11, 13; 12, 14).

6. Apparatus according to one of claims 1 to 5 characterised in that the lighting device (6, 7) includes a light source (6) and a cross-section changer (7) with light guides for emitting lightin the form of an elongated vertical strip on to a lower portion of the sedimentometer (1, 3).

7. Apparatus according to one of claims 1 to 6 characterised in that the light receivers (11, 13; 12, 14) include two lenses (11, 12) arranged one above the other for concentrating light from a respective portion of the sedimentometer (1, 3) on to a respective light-sensitive element (13, 14).

8. A method of automatically ascertaining the sedimentation height in the course of a sedimentation procedure in a sedimentometer, wherein arranged on mutually opposite sides of the sedimentometer (1, 3) are at least one lighting device (6, 7) and a light sensor device (5), wherein the light sensor device is adjusted in respect of height by means of a setting motor (18) and receives signals from the lighting device by two light receivers (11, 13; 12, 14) arranged one above the other, and wherein the output signals of the two light receivers are fed to a regulating device (16, 17) which are operatively connected to the setting motor (18) in such a way that the amounts of light incident on the two light receivers (11, 13; 12, 14) in the course of the sedimentation procedure are always in a predeterminable ratio to each other.

## Revendications

1. Dispositif pour déterminer automatiquement la hauteur de sédimentation au cours d'un processus de sédimentation dans un sédimentomètre, dans lequel au moins un dispositif d'éclairage (6, 7) et un dispositif formant capteur de lumière (5) sont disposés sur des côtés opposés du sédimentomètre (1, 3), le dispositif formant capteur de lumière est réglable en hauteur à l'aide d'un servomoteur (18) et contient deux récepteurs de lumière (11, 13 ; 12, 14) superposés, et les signaux de sortie des deux récepteurs de lumière sont transmis à un dispositif régulateur (16, 17) qui est en relation fonctionnelle avec le servomoteur (18) pour que la hauteur des deux récepteurs de lumière (11, 13 ; 12, 14) soit apte à être réajustée, de sorte que les quantités de lumière qui arrivent sur chaque récepteur de lumière présentent entre elles en permanence, au cours du processus de sédimentation, un rapport apte à être prédéfini.

2. Dispositif selon la revendication 1, caractérisé en ce que le dispositif formant capteur de lumière (5) est accouplé à au moins un générateur de signaux (20) dont le signal de sortie représente le réglage en hauteur du dispositif formant capteur de lumière (5).

3. Dispositif selon la revendication 2, caractérisé en ce que le signal de sortie du générateur de signaux (20) est transmis à un dispositif d'évaluation (22 ; 21, 23) qui représente en fonction du temps le réglage en hauteur.

4. Dispositif selon la revendication 3, caractérisé en ce que le dispositif d'évaluation (21, 23) contient un calculateur (21) pour déterminer la répartition cumulée des grosseurs de grain d'un échantillon ou une courbe de répartition granulométrique.

5. Dispositif selon l'une des revendications 1 à 4, caractérisé en ce que le dispositif régulateur (16, 17) contient un amplificateur différentiel logarithmique (16) pour les signaux de sortie des deux récepteurs de lumière (11, 13 ; 12, 14).

6. Dispositif selon l'une des revendications 1 à 5, caractérisé en ce que le dispositif d'éclairage (6, 7) contient une source lumineuse (6) et un convertisseur de section (7) pourvu de guides de lumière pour émettre de la lumière sur une section inférieure du sédimentomètre (1, 3) sous la forme d'une bande verticale allongée.

7. Dispositif selon l'une des revendications 1 à 6, caractérisé en ce que les récepteurs de lumière (11, 13 ; 12, 14) contiennent deux lentilles superposées (11, 12) destinées à concentrer la lumière provenant de sections du sédimentomètre (1, 3) sur des éléments photosensibles respectifs (13, 14).

8. Procédé pour déterminer automatiquement la hauteur de sédimentation au cours d'un processus de sédimentation dans un sédimentomètre, selon lequel au moins un dispositif d'éclairage (6, 7) et un dispositif formant capteur de lumière (5) sont disposés sur des côtés opposés du sédimentomètre (1, 3), selon lequel le dispositif formant capteur de lumière est réglé en hauteur à l'aide d'un servomoteur (18) et reçoit grâce à deux récepteurs de lumière (11, 13 ; 12, 14) superposés des signaux provenant du dispositif d'éclairage, et selon lequel les signaux de sortie des deux récepteurs de lumière sont transmis à un dispositif régulateur (16, 17) qui est en relation fonctionnelle avec le servomoteur (18) pour que les quantités de lumière qui arrivent sur les deux récepteurs de lumière (11, 13 ; 12, 14) présentent entre elles en permanence, au cours du processus de sédimentation, un rapport apte à être prédéfini.

Fig.1

H

1

2

3

4

19

Fig. 2

10

3

7

4

9

8

6

11

5

13

12

14

18

20

Fig. 3

13

15

16

17

18

22

14

20

21

23